# FASCICULE DE BREVET EUROPEEN

(11) **EP 0 708 013 B1**
(45) Date de publication et mention de la délivrance du brevet: **12.01.2005**
(21) Numéro de dépôt: 94402345.6
(22) Date de dépôt: 18.10.1994
(51) Int. Cl.: B62D 7/22

(54) **Mécanisme de direction pour véhicule automobile**
Lenkung für ein Kraftfahrzeug
Steering for motor vehicle

(43) Date de publication de la demande: 24.04.1996
(73) Titulaire: GIAT INDUSTRIES, 78000 Versailles (FR)
(72) Inventeur: Sansot, Dominique, F-78000 Versailles (FR)
(74) Mandataire: Célanie, Christian

(56) Documents cités:
- EP-A- 0 442 570
- WO-A-83/02096
- DE-A- 2 421 966
- FR-A- 602 734
- FR-A- 2 662 133
- GB-A- 1 450 859
- US-A- 1 783 348
- US-A- 1 830 105

## Description

La présente invention concerne un mécanisme de direction pour véhicule automobile, du type comprenant un dispositif de démultiplication, par exemple à engrenages ou à vis à billes avec ou sans assistance, accouplé d'une part à un volant au moyen d'une colonne de direction et d'autre part aux roues directrices du véhicule au moyen d'une timonerie.

Avec ce type de mécanisme de direction, un choc relativement violent des roues directrices du véhicule sur un obstacle tel qu'un trottoir par exemple, provoque une remontée d'effort brutale et soudaine qui est transmise jusqu'au volant par la liaison mécanique qui existe entre les roues directrices et le volant. Cette remontée d'effort est dangereuse, car elle fait perdre momentanément au conducteur le contrôle de son véhicule et peut même détériorer le mécanisme de contrôle de direction, ce qui peut entraîner un accident, et limite en outre l'utilisation du véhicule en tout terrain où on rencontre de nombreux obstacles.

Le brevet US-A-1 830 105, sur lequel est fondé le préambule des revendications 1 et 2, décrit un mécanisme de direction pour véhicule automobile comprenant un dispositif de démultiplication accouplé d'une part à un volant au moyen d'une colonne de direction et d'autre part aux roues directrices du véhicule au moyen d'une timonerie Ce mécanisme comporte des moyens sensibles aux chocs agencés entre l'essieu rigide avant et un élément de timonerie susceptible de se déplacer par rapport à l'essieu en cas de choc violent des roues avant sur un obstacle, ces moyens permettant les déplacements de l'élément de timonerie lorsque l'importance du choc est inférieure à une certaine valeur. On interdit alors les déplacements de l'élément de timonerie lorsque l'importance du choc est supérieure à la valeur fixée en disposant ces moyens à la sortie d'un dispositif de conversion amplificateur du mouvement de déplacement linéaire de l'élément de timonerie en un mouvement de rotation. Ce brevet décrit plutôt un dispositif d'amortissement en continu des oscillations rapides des roues.

Le brevet GB-A-1 450 859 décrit un mécanisme de direction comportant des moyens sensibles aux chocs agencés entre un point fixe par rapport au châssis et la colonne de direction, dont le déplacment est interdit quand sa vitesse de rotation est supérieure à une valeur prédéterminée. Les moyens sensibles aux.chocs comprennent un embrayage centrifuge équipé de deux disques rotatifs en vis-à-vis et un frein rotatif commandé par le second disque. On absorbe donc par friction l'énergie de rotation de l'arbre.

D'une manière générale, la majorité des véhicules automobiles, en particulier du type poids lourd, sont équipés d'un mécanisme de direction assistée dans lequel une source d'énergie auxiliaire est utilisée pour assurer le bracage des roues. Cependant, la capacité de réaction d'une direction assistée ne permet pas de filtrer des chocs violents par suite d'un temps de réponse et d'une capacité d'effort insuffisants. Autrement dit, un mécanisme de direction assistée n'est pas en mesure de pouvoir limiter la transmission jusqu'au volant d'un effort brutal résultant d'un choc des roues directrices sur un obstacle.

Le but de l'invention est d'apporter une solution à ce problème.

L'invention a donc pour objet un mécanisme de direction pour véhicule automobile, du type comprenant un dispositif de démultiplication, accouplé d'une part à un volant au moyen d'une colonne de direction et d'autre part aux roues directrices du véhicule au moyen d'une timonerie, ce mécanisme comprenant des moyens sensibles aux chocs agencés entre un point fixe du châssis (C) et un élément de timonerie susceptible de se déplacer par rapport au châssis (C) en cas de choc violent des roues directrices sur un obstacle, ces moyens sensibles aux chocs transmettant les déplacements de l'élément de timonerie lorsque l'importance du choc est inférieure à un seuil prédéterminé, et interdisant les déplacements de l'élément de timonerie lorsque l'importance du choc est supérieure au seuil précité et disposé à la sortie d'un dispositif de conversion amplificateur du mouvement de déplacement linéaire de l'élément de timonerie en un mouvement de rotation, caractérisé en ce que le dispositif de démultiplication est du type à engrenages ou à vis à billes avec ou sans assistance, en ce que les moyens sensibles aux chocs comprennent un premier dispositif relié audit élément de timonerie et constitué par un embrayage centrifuge équipé de deux disques rotatifs en vis-à-vis, un premier disque étant accouplé en rotation au dispositif de conversion, en ce que les moyens sensibles aux chocs comprennent également un second dispositif associé audit premier dispositif pour interdire les déplacements de l'élément de timonerie lorsque la vitesse de déplacement ou l'accélération dudit premier dispositif est supérieure à une valeur prédéterminée, ce second dispositif étant constitué par un frein rotatif commandé par le second disque de l'embrayage centrifuge, et en ce que le dispositif de conversion est une vis à bille.

L'invention a également pour objet un mécanisme de direction pour véhicule automobile, du type comprenant un dispositif de démultiplication, accouplé d'une part à un volant au moyen d'une colonne de direction et d'autre part aux roues directrices du véhicule au moyen d'une timonerie, ce mécanisme comprenant des moyens sensibles aux chocs agencés entre un point fixe du châssis (C) et un élément de timonerie susceptible de se déplacer par rapport au châssis (C) en cas de choc violent des roues directrices sur un obstacle, ces moyens sensibles aux chocs transmettant les déplacements de l'élément de timonerie lorsque l'importance du choc est inférieure à un seuil prédéterminé, et interdisant les déplacements de l'élément de timonerie lorsque l'importance du choc est supérieure au seuil précité et disposé à la sortie d'un dispositif de conversion amplificateur du mouvement de déplacement linéaire de l'élément de timonerie en un mouvement de rotation, caractérisé en ce que le dispositif de démultiplication est du type à engrenages ou à vis à billes avec ou sans assistance, en ce que les moyens sensibles aux chocs comprennent un premier dispositif relié audit élément de timonerie et constitué par un embrayage centrifuge équipé de deux disques rotatifs en vis-à-vis, un premier disque étant accouplé en rotation au dispositif de conversion, en ce que les moyens sensibles aux chocs comprennent également un second dispositif associé audit premier dispositif pour interdire les déplacement de l'élément de timonerie lorsque la vitesse de déplacements ou l'accélération dudit premier dispositif est supérieure à une valeur prédéterminée, ce second dispositif étant constitué par un frein rotatif commandé par le second disque de l'embrayage centrifuge, et en ce que le frein est un frein multi-disques à accouplement visqueux.

Selon une caractéristique de l'invention, la vitesse de déplacement du premier dispositif des moyens sensibles aux chocs est une vitesse de rotation.

Selon une autre caractéristique de l'invention, le frein rotatif comprend une première série de disques solidaires du châssis (C) du véhicule et une seconde série de disques intercalés entre les disques fixes et solidaires en rotation du second disque de l'embrayage.

Selon encore une caractéristique de l'invention, l'élément de timonerie auquel sont reliés les moyens sensibles aux chocs est une bielle d'accouplement dont les deux extrémités sont respectivement articulées à deux biellettes de direction reliées à deux roues directrices du véhicule.

Les disques sont logés à l'intérieur d'un boîtier contenant un fluide visqueux dont la viscosité est suffisante pour s'opposer à la rotation des disques lorsque l'embrayage centrifuge est enclenché par suite d'une vitesse de rotation élevée du premier disque de l'embrayage.

Selon un avantage de l'invention, les moyens sensibles aux chocs peuvent être incorporés de manière simple dans tout mécanisme de direction pour véhicule automobile, le mécanisme de direction étant du type assisté ou non.

Selon un autre avantage de l'invention, tout véhicule automobile, en particulier un véhicule du type poids lourd, équipé des moyens sensibles aux chocs conformes à l'invention, est plus apte à se déplacer sur un terrain accidenté que tout autre véhicule non équipé de ces moyens.

D'autres avantages, caractéristiques et détails de l'invention ressortiront de la description explicative qui va suivre faite en référence aux dessins annexés, donnés uniquement à titre d'exemple, et dans lesquels :
- la figure 1 est une vue schématique de principe d'un mécanisme de direction selon l'invention qui est équipé de moyens sensibles aux chocs,
- la figure 2 est une vue schématique de principe d'un mode de réalisation des moyens sensibles aux chocs illustrés à la figure 1,
- la figure 3 est une vue schématique de principe d'autres moyens sensibles aux chocs.

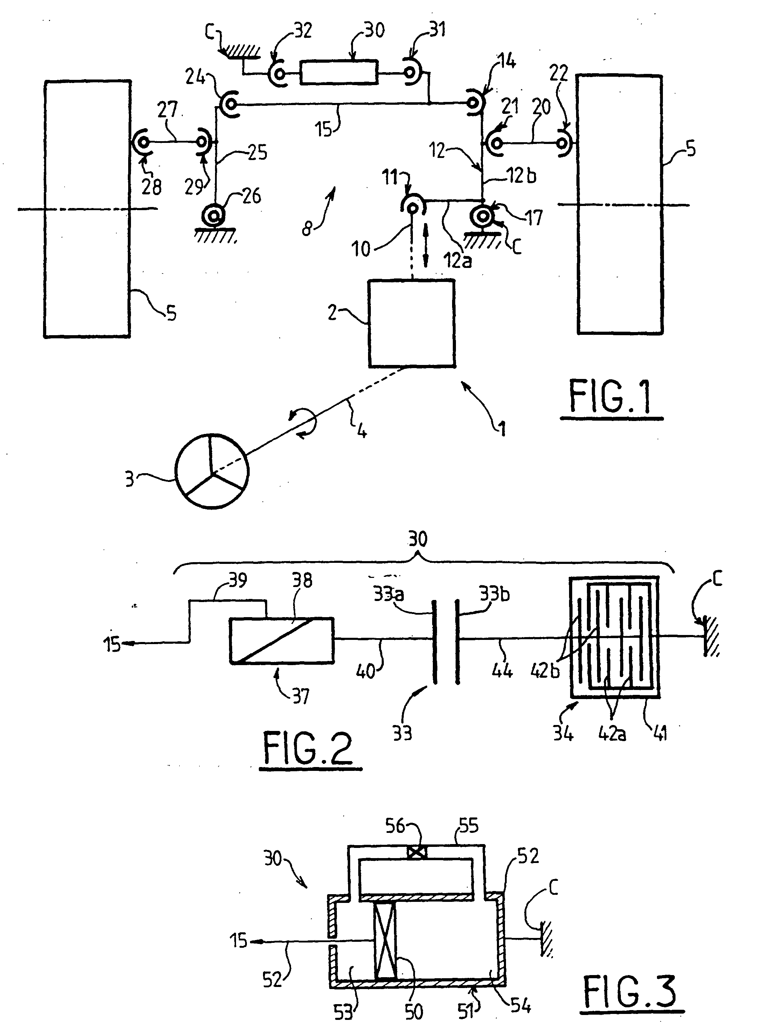

En se reportant à la figure 1, un mécanisme de direction 1 pour véhicule automobile comprend un dispositif de démultiplication 2 par exemple à engrenages accouplé d'une part à un volant 3 au moyen d'une colonne de direction 4 et d'autre part aux roues directrices 5 du véhicule au moyen d'une timonerie 8. Le dispositif de démultiplication à engrenages contenu dans le boîtier 2 peut être soit une crémaillère sur laquelle engrène un pignon hélicoîdal solidaire en rotation de la colonne de direction, soit un secteur denté qui engrène une vis sans fin solidaire en rotation de la colonne de direction. Les deux roues directrices 5 représentées schématiquement à la figure 1 sont celles de l'essieu avant ou arrière du véhicule.

La timonerie 8 comprend un ensemble d'éléments qui sont destinés à braquer les roues directrices 5 à gauche ou à droite selon le sens de rotation imprimé au volant 3 par le conducteur. Ces éléments comprennent une bielle de commande 10 reliée au dispositif de démultiplication 2, et on supposera que cette bielle de commande 10 se déplace suivant un mouvement de translation dont l'amplitude est proportionnelle à l'angle de rotation du volant. A son autre extrémité, la bielle de commande 10 est articulée par une rotule 11 à une branche 12a d'un levier coudé 12 dont l'autre extrémité est articulée par une rotule 14 à l'extrémité d'une bielle d'accouplement 15. Le levier coudé 12 est monté pivotant autour d'un arbre 17 supporté en rotation par le châssis C du véhicule. Les deux extrémités d'une biellette de direction 20 sont reliées par deux rotules 21 et 22 à la seconde branche 12b du levier coudé 12 et à la fusée (non représentée) de l'une des deux roues directrices 5, respectivement. L'autre extrémité de la bielle d'accouplement 15 est reliée par une rotule 24 à l'extrémité d'un levier 25 dont l'autre extrémité est montée pivotante autour d'un arbre 26 supporté en rotation par le châssis C du véhicule. Les deux extrémités d'une biellette de direction 27 sont respectivement articulées par deux rotules 28 et 29 à la fusée (non représentée) de l'autre roue directrice et au levier 25, respectivement.

D'une manière générale, le levier coudé 12, la bielle d'accouplement 15 et le levier 25 forment un parallélogramme déformable articulé sur les deux arbres de pivotement 17 et 26.

Selon l'invention, des moyens 30 sensibles aux chocs sont interposés entre un point fixe du châssis C du véhicule et un élément de timonerie susceptible de se déplacer par rapport audit châssis C en cas de choc violent des roues directrices 5 sur un obstacle. A titre d'exemple, l'élément de timonerie concerné est la bielle d'accouplement 15 de la timonerie 8. D'une manière générale, les moyens 30 sensibles aux chocs sont reliés de façon articulée à un point fixe du châssis C d'une part et à la bielle d'accouplement 15 d'autre part. Sur la figure 1 de principe, ces articulations sont schématisées par des rotules 31 et 32, de manière à ce que les moyens 30 sensibles aux chocs puissent se déplacer lors du déplacement linéaire de la bielle d'accouplement 15 provoqué par le pivotement du levier coudé 12 autour de l'arbre 17 par suite du déplacement de la bielle de commande 10 sous la rotation du volant 3 imprimée par le conducteur.

Un mode de réalisation des moyens 30 sensibles aux chocs est illustré à la figure 2. Ces moyens 30 du type mécanique comprennent un premier dispositif tel qu'un embrayage centrifuge 33 et un second dispositif tel qu'un frein rotatif à friction 34. L'embrayage centrifuge 33 comprend deux disques en vis-à-vis 33a et 33b. Le disque 33a est relié à un convertisseur de mouvement 37 qui transforme le déplacement linéaire de la bielle d'accouplement 15 en un mouvement de rotation amplifié qui est transmis au disque 33a. Ce convertisseur 37 est par exemple constitué par une vis à bille 38 qui est reliée en entrée à un levier intermédiaire 39 lui-même relié à la bielle d'accouplement 15, et en sortie au disque 33a par un arbre rotatif 40. Le frein rotatif à friction 34 comprend un boîtier 41 dans lequel sont logées une première série de disques 42a fixes solidaires du châssis C du véhicule, et une seconde série de disques 42b intercalés entre les disques 42a et solidaires en rotation d'un arbre 44 dont est également solidaire en rotation le second disque 33b de l'embrayage centrifuge 33.

En fonctionnement, lorsque les roues directrices 5 ne viennent pas heurter un obstacle, les moyens 30 sensibles aux chocs n'influencent pas le mécanisme de direction 1. Cependant, lorsque le conducteur tourne le volant 3, le déplacement linéaire de la bielle d'accouplement 15 provoque une rotation du disque 33a de l'embrayage centrifuge 33, mais tant que cette vitesse de rotation reste inférieure à une valeur prédéterminée, l'embrayage 33 n'est pas enclenché, c'est-à-dire que le disque 33b reste fixe et le frein à friction 34 est inerte. Par contre, lors d'un choc violent par exemple de l'une des roues directrices 5 sur un obstacle, le déplacement brusque de la bielle d'accouplement 15 provoque une rotation à vitesse élevée du disque 33a qui entraîne l'enclenchement de l'embrayage 33 par suite de l'accouplement entre les deux disques 33a et 33b. Il devrait résulter normalement une mise en rotation des disques 42b du frein rotatif 34, mais la résistance opposée par la viscosité du fluide contenu dans le boîtier 41 s'oppose à la rotation des disques 42b. Dans ces conditions, on créé une liaison rigide entre la bielle d'accouplement 15 et le châssis C du véhicule par l'intermédiaire des moyens 30 sensibles aux chocs, si bien que les efforts résultants d'un choc violent sont transmis directement au châssis C du véhicule sans remonter jusqu'au volant 3.

Dans le dispositif de la figure 3, les moyens 30 sensibles aux chocs sont du type hydraulique. Ces moyens 30 sont constitués par un piston 50 d'un vérin 51 qui est relié par une tige ou tige de piston 52 à la bielle d'accouplement 15, alors que le corps 52 du vérin est relié à un point fixe du châssis C. Le piston 50 partage le volume intérieur du vérin 51 en deux chambres 53 et 54 à volume variable. Ces deux chambres 53 et 54 communiquent l'une avec l'autre par l'intermédiaire d'une canalisation de liaison 55 dans laquelle est interposé un dispositif obturateur 56 susceptible d'interrompre le passage du fluide entre les deux chambres 53 et 54.

En fonctionnement, lorsque les roues directrices 5 ne viennent pas heurter un obstacle, les moyens 30 sensibles aux chocs n'influencent pas le mécanisme de direction 1. Cependant, lorsque le conducteur tourne le volant 3, le déplacement linéaire de la bielle d'accouplement 15 est transmis au piston 50 par la tige 52. Le déplacement du piston 50 refoule par exemple le fluide contenu dans la chambre 54 vers la chambre 53 au travers de la canalisation de liaison 55, le dispositif obturateur 56 n'agissant pas. Par contre, lors d'un choc violent d'au moins l'une des roues directrices 5 sur un obstacle, le déplacement brusque du piston 50 va provoquer une augmentation de la pression de l'huile qu'il refoule dans la chambre 53, cette pression devenant alors suffisante pour fermer le dispositif obturateur 56 pour immobiliser instantanément le piston 50. Les moyens 30 sensibles aux chocs tendent à créer une liaison rigide entre l'élément de timonerie 15 et un point fixe du châssis pour absorber les efforts résultants d'un choc violent et éviter leur remontée jusqu'au volant 3.

## Revendications

1. Mécanisme de direction pour véhicule automobile, du type comprenant un dispositif de démultiplication, accouplé d'une part à un volant au moyen d'une colonne de direction et d'autre part aux roues directrices du véhicule au moyen d'une timonerie, ce mécanisme comprenant des moyens (30) sensibles aux chocs agencés entre un point fixe du châssis (C) et un élément de timonerie (15) susceptible de se déplacer par rapport au châssis (C) en cas de choc violent des roues directrices (5) sur un obstacle, ces moyens (30) sensibles aux chocs transmettant les déplacements de l'élément de timonerie (15) lorsque l'importance du choc est inférieure à un seuil prédéterminé, et interdisant les déplacements de l'élément de timonerie (15) lorsque l'importance du choc est supérieure au seuil précité et disposé à la sortie d'un dispositif de conversion amplificateur (37) du mouvement de déplacement linéaire de l'élément de timonerie (15) en un mouvement de rotation, **caractérisé en ce que** le dispositif de démultiplication est du type à engrenages ou à vis à billes avec ou sans assistance, **en ce que** les moyens (30) sensibles aux chocs comprennent un premier dispositif (33) relié audit élément de timonerie (15) et constitué par un embrayage centrifuge équipé de deux disques rotatifs en vis-à-vis (33a;33b), un premier disque (33a) étant accouplé en rotation au dispositif de conversion, **en ce que** les moyens (30) sensibles aux chocs comprennent également un second dispositif (34) associé audit premier dispositif (33) pour interdire les déplacements de l'élément de timonerie (15) lorsque la vitesse de déplacement ou l'accélération dudit premier dispositif (32) est supérieure à une valeur prédéterminée, ce second dispositif étant constitué par un frein rotatif commandé par le second disque (33b) de l'embrayage centrifuge (33), et **en ce que** le dispositif de conversion (37) est une vis à bille.

2. Mécanisme de direction pour véhicule automobile, du type comprenant un dispositif de démultiplication, accouplé d'une part à un volant au moyen d'une colonne de direction et d'autre part aux roues directrices du véhicule au moyen d'une timonerie, ce mécanisme comprenant des moyens (30) sensibles aux chocs agencés entre un point fixe du châssis (C) et un élément de timonerie (15) susceptible de se déplacer par rapport au châssis (C) en cas de choc violent des roues directrices (5) sur un obstacle, ces moyens (30) sensibles aux chocs transmettant les déplacements de l'élément de timonerie (15) lorsque l'importance du choc est inférieure à un seuil prédéterminé, et interdisant les déplacements de l'élément de timonerie (15) lorsque l'importance du choc est supérieure au seuil précité et disposé à la sortie d'un dispositif de conversion amplificateur (37) du mouvement de déplacement linéaire de l'élément de timonerie (15) en un mouvement de rotation, **caractérisé en ce que** le dispositif de démultiplication est du type à engrenages ou à vis à billes avec ou sans assistance, **en ce que** les moyens (30) sensibles aux chocs comprennent un premier dispositif (33) relié audit élément de timonerie (15) et constitué par un embrayage centrifuge équipé de deux disques rotatifs en vis-à-vis (33a; 33b), un premier disque (33a) étant accouplé en rotation au dispositif de conversion, **en ce que** les moyens (30) sensibles aux chocs comprennent également un second dispositif (34) associé audit premier dispositif (33) pour interdire les déplacements de l'élément de timonerie (15) lorsque la vitesse de déplacement ou l'accélération dudit premier dispositif (32) est supérieure à une valeur prédéterminée, ce second dispositif étant constitué par un frein rotatif (34) commandé par le second disque (33b) de l'embrayage centrifuge (33), et **en ce que** le frein (34) est un frein multi-disques à accouplement visqueux.

3. Mécanisme de direction selon la revendication 1 ou 2, **caractérisé en ce que** la vitesse de déplacement du premier dispositif (33) des moyens (30) sensibles aux chocs est une vitesse de rotation.

4. Mécanisme de direction selon l'une des revendications 1 à 3, **caractérisé en ce que** le frein rotatif (34) comprend une première série de disques (42a) solidaires du châssis (C) du véhicule et une seconde servie de disques (42b) intercalés entre les disques fixes (42a) et solidaires en rotation du second disque (33b) de l'embrayage (33).

5. Mécanisme de direction selon l'une quelconque des revendications précédentes, **caractérisé en ce que** l'élément de timonerie (15) auquel sont reliés les moyens (30) sensibles aux chocs est une bielle d'accouplement dont les deux extrémités sont respectivement articulées à deux biellettes de direction (20;27) reliées à deux roues directrices (5) du véhicule.

## Patentansprüche

1. Lenkmechanismus für ein Automobil des Typs mit einer Untersetzungsvorrichtung, einerseits gekoppelt mit einem Lenkrad über eine Lenksäule und, andererseits, gekoppelt mit den Leiträdern des Fahrzeugs über ein Lenkgestänge, wobei dieser Mechanismus stoßempfindliche Mittel (30) umfaßt, die zwischen einem Fixpunkt des Chassis (C) und einem Lenkgestängeelement (15) angebracht sind, das sich in bezug auf das Chassis (C) bei einem plötzlichen Stoß der Leiträder (5) gegen ein Hindernis verschieben kann, wobei diese stoßempfindlichen Mittel (30) die Verschiebungen des Lenkgestängeelements (15) übertragen, wenn die Kraft des Stoßes unter einem vorausbestimmten Schwellenwert liegt, und die Verschiebung des Lenkgestängeelements (15) untersagen, wenn die Kraft des Stoßes größer ist als der soeben erwähnte Schwellenwert und angebracht am Ausgang einer verstärkenden Umwandlungsvorrichtung(37) der linearen Verschiebungsbewegung des Lenkgestängeelements (15) in eine Drehbewegung,**gekennzeichnet dadurch, daß** die Untersetzungsvorrichtung des Typs mit Getriebe oder Kugelumlaufspindel mit oder ohne Servovorrichtung ist, dadurch, daß die stoßempfindlichen Mittel (30) eine erste Vorrichtung (33) umfassen, die mit besagtem Lenkgestängeelement (15) verbunden ist und aus einer Fliehkraftkupplung mit zwei einander gegenüberliegenden Drehscheiben (33a, 33b) besteht, wobei eine erste Scheibe (33a) in Drehung mit der Umwandlungsvorrichtung gekoppelt ist, dadurch daß die stoßempfindlichen Mittel (30) außerdem eine zweite Vorrichtung (34) umfassen, die mit der ersten Vorrichtung (33) kombiniert ist, um die Verschiebungen des Lenkgestängeelements (15) zu verhindern, wenn die Verschiebungsgeschwindigkeit oder Beschleunigung der besagten ersten Vorrichtung (32) größer ist als ein vorausbestimmter Schwellenwert, wobei diese zweite Vorrichtung aus einer von der zweiten Scheibe (33b) der Fliehkraftkupplung (33) gesteuerten Drehbremse besteht, und dadurch, daß die Umwandlungsvorrichtung (37) eine Kugelumlaufspindel ist.

2. Lenkmechanismus für Automobilfahrzeuge des Typs mit einer Untersetzungsvorrichtung, gekoppelt einerseits mit einem Lenkrad über eine Lenksäule und, andererseits, mit den Leiträdern des Fahrzeugs über ein Lenkgestänge, wobei dieser Mechanismus stoßempfindliche Mittel (30) umfaßt, die zwischen einem Fixpunkt des Chassis (C) und einem Lenkgestängeelement (15) angebracht sind, das sich in bezug auf das Chassis (C) bei einem plötzlichen Stoß der Leiträder (5) gegen ein Hindernis verschieben kann, wobei diese sto§empfindlichen Mittel (30) die Verschiebungen des Lenkgestängeelements (15) übertragen, wenn die Kraft des Stoßes geringer ist als ein vorausbestimmter Schwellenwert und die Verschiebungen des Lenkgestängeelements (15) verhindern, wenn die Kraft des Stoßes größer ist als der oben genannte Schwellenwert und angebracht am Ausgang einer verstärkenden Umwandlungsvorrichtung (37) der linearen Verschiebungsbewegung des Lenkgestängeelements (15) in eine Drehbewegung, **gekennzeichnet dadurch, daß** die Untersetzungsvorrichtung des Typs mit Getriebe oder Kugelumlaufspindel mit oder ohne Servovorrichtung ist, dadurch, daß die stoßempfindlichen Mittel (30) eine erste Vorrichtung (33) umfassen, die mit besagtem Lenkgestängeelement (15) verbunden ist und aus einer Fliehkraftkupplung mit zwei einander gegenüberliegenden Drehscheiben (33a, 33b) besteht, wobei eine erste Scheibe (33a) in Drehung mit der Umwandlungsvorrichtung gekoppelt ist, dadurch, daß die stoßempfindlichen Mittel (30) außerdem eine zweite Vorrichtung (34) umfassen, die mit besagter erster Vorrichtung (33) kombiniert ist, um die Verschiebungen des Lenkgestängeelements (15) zu verhindern, wenn die Verschiebungsgeschwindigkeit oder Beschleunigung der ersten Vorrichtung (32) größer ist als ein vorausbestimmter Schwellenwert, wobei diese zweite Vorrichtung aus einer Drehbremse (34) besteht, die von der zweiten Scheibe (33b) der Fliehkraftkupplung (33) gesteuert wird, und dadurch, daß die Bremse (34) eine Mehrfachscheibenbremse mit viskoser Kupplung ist.

3. Lenkmechanismus gemäß dem Anspruch 1 oder 2, **gekennzeichnet dadurch, daß** die Verschiebungsgeschwindigkeit der ersten Vorrichtung (33) der stoßempfindlichen Mittel (30) eine Drehgeschwindigkeit ist.

4. Lenkmechanismus gemäß einem der Ansprüche 1 bis 3, **gekennzeichnet dadurch, daß** die Drehbremse (34) eine erste Reihe Scheiben (42a) umfaßt, die fest mit dem Chassis (C) des Fahrzeugs verbunden sind, und eine zweite Reihe Scheiben (42b), die zwischen die stationären Scheiben (42a) eingefügt sind und in Drehung fest mit der zweiten Scheibe (33b) der Kupplung (33) verbunden sind.

5. Lenkmechanismus gemäß einem beliebigen der vorhergehenden Ansprüche, **gekennzeichnet dadurch, daß** das Lenkgestängeelement (15), mit dem die stoßempfindlichen Mittel (30) verbunden sind, eine Kupplungspleuelstange ist, deren beide Ende jeweils gelenkig mit zwei Nebenpleuelstangen (20, 27) verbunden sind, die selbst mit den zwei Leiträdern (5) des Fahrzeugs verbunden sind.

## Claims

1. A steering mechanism for an automobile vehicle, of the type comprising a demultiplication device, coupled firstly with a steering wheel by means of a steering column and secondly to the drive wheels of the vehicle by means of steering gear, this mechanism comprising means (30) sensitive to shocks arranged between a fixed point on the chassis (C) and a steering gear element (15) able to move with respect to the chassis (C) in the event of a violent shock to the drive wheels (5) from an obstacle, these shock-sensitive means (30) transmitting the displacements of the steering gear element (15) when the size of the shock is under a predetermined threshold, and preventing the displacements of the steering gear element (15) when the size of the shock is over the aforementioned threshold and arranged at the output of a device (37) to amplify the linear displacement of the steering gear element (15) and convert it into a rotational movement, ***characterized in that*** the demultiplication device is of the gear of ballscrew type with or without power-assistance, and **in that** the shock-sensitive means (30) comprise a first device (33) connected to said steering gear element (15) and formed by a centrifugal clutch equipped with two rotating plates (33a, 33b) mounted opposite each other, a first plate (33a) being coupled in rotation with the conversion device, and **in that** the shock-sensitive means (30) also comprise a second device (34) associated with said first device (33) to prevent the displacements of the steering gear element (15) when the displacement or acceleration speed of said first device (32) is over a predetermined value, this second device being formed by a rotating brake controlled by the second plate (33b) of the centrifugal clutch (33), and **in that** the conversion device (37) is a ballscrew.

2. A steering mechanism for an automobile vehicle, of the type comprising a demultiplication device, coupled firstly with a steering wheel by means of a steering column and secondly with the drive wheels of the vehicle by means of steering gear, this mechanism comprising means sensitive to shocks (30) arranged between a fixed point on the chassis (C) and a steering gear element (15) able to move with respect to the chassis (C) in the event of a violent shock to the drive wheels (5) from an obstacle, these shock-sensitive means (30) transmit the movements of the steering gear element (15) when the size of the shock is under a predetermined threshold, and prevent the steering gear element (15) from moving when the size of the shock is over the afore-mentioned threshold and arranged at the output of a device (37) to amplify the linear displacements of the steering gear element (15) and convert them into rotational movements, ***characterized in that*** the demultiplication device is of the gear or ballscrew type with or without a power-assistance, and **in that** the shock-sensitive means (30) comprise a first device (33) connected to said steering gear element (15) and formed by a centrifugal clutch equipped with two rotating plates (33a, 33b) mounted opposite each other, a first plate (33a) being coupled in rotation with the conversion device, and **in that** the shock-sensitive means (30) also comprise a second device (34) associated with said first device (33) to prevent the displacements of the steering gear element (15) when the displacement or acceleration speed of said first device (32) is over a predetermined value, this second device being formed by a rotating brake (34) controlled by the second plate (33b) of the centrifugal clutch (33), and **in that** the brake (34) is a viscous-coupled multi-disk brake.

3. A steering mechanism according to Claim 1 or 2, **characterized in that** the displacement speed of the first device (33) of the shock-sensitive means (30) is a rotational speed.

4. A steering mechanism according to one of Claims 1 to 3, **characterized in that** the rotating brake (34) comprises a first series of disks (42a) integral with the chassis (C) of the vehicle and a second series of disk (42b) placed between the fixed disks (42a) and integral in rotation with the second plate (33b) of the clutch (33).

5. A steering mechanism according to any one of the above Claims, **characterized in that** the steering gear element (15) to which the shock-sensitive means (30) are connected is a coupling rod whose two ends are respectively hinged to two steering connection rods (20, 27) linked to two drive wheels (5) of the vehicle.
